(19) Europäisches Patentamt
European Patent Office
Office européen des brevets

(11) EP 0 800 617 B1

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(21) Anmeldenummer: **96945353.9**

(22) Anmeldetag: **08.10.1996**

(51) Int Cl.⁶: **F01N 3/20**

(86) Internationale Anmeldenummer:
**PCT/DE96/01922**

(87) Internationale Veröffentlichungsnummer:
**WO 97/16631 (09.05.1997 Gazette 1997/20)**

(54) **VERFAHREN ZUR ÜBERPRÜFUNG DER FUNKTIONSFÄHIGKEIT EINES KATALYSATORS MIT EINEM SAUERSTOFFSENSOR**

PROCESS FOR TESTING THE OPERATION OF A CATALYTIC CONVERTER WITH AN OXYGEN SENSOR

PROCEDE DE VERIFICATION DU BON FONCTIONNEMENT D'UN POT CATALYTIQUE A L'AIDE D'UN DETECTEUR D'OXYGENE

(84) Benannte Vertragsstaaten:
**ES FR GB**

(30) Priorität: **31.10.1995 DE 19540673**

(43) Veröffentlichungstag der Anmeldung:
**15.10.1997 Patentblatt 1997/42**

(73) Patentinhaber: **SIEMENS AKTIENGESELLSCHAFT 80333 München (DE)**

(72) Erfinder:
- **LEMIRE, Bertrand D-93059 Regensburg (DE)**
- **SCHÜRZ, Willibald D-93089 Aufhausen (DE)**

(56) Entgegenhaltungen:
| | |
|---|---|
| EP-A- 0 743 431 | WO-A-93/03358 |
| DE-A- 4 019 572 | DE-A- 4 022 546 |
| US-A- 4 617 795 | US-A- 5 357 750 |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Überprüfung eines Katalysators mit einem Sauerstoffsensor gemäß dem Oberbegriff des Anspruchs 1.

Aus der WO 93/03358 ist bereits ein Verfahren zur Überprüfung eines Katalysators mit einem Sauerstoffsensor bekannt. Dabei sind nach dem Katalysator ein erster Sauerstoffsensor mit hoher katalytischer Aktivität und ein zweiter Sauerstoffsensor mit niedriger katalytischer Aktivität angeordnet. Zur Beurteilung der Funktionsfähigkeit des Katalysators werden Verschiebungen der Ausgangssignale des ersten und des zweiten Sauerstoffsensors in bezug auf das Abgasverhältnis von Luft zu Kraftstoff miteinander verglichen. Die Sauerstoffsensoren basieren auf sauerstoffleitendem Zirkoniumoxid (ZrO2). Das verwendete Auswerteverfahren ist relativ aufwendig.

Die DE 4022546 A1 beschreibt einen Meßfühler für ein Abgassystem, der aus mindestens zwei Teilfühlern besteht, die unterschiedlich aktive Oberflächen aufweisen, von denen mindestens einer mit einer katalytisch aktiven Beschichtung versehen ist. Bei Vorhandensein von Schadstoffen wird der Teilfühler, der die katalytisch aktive Beschichtung aufweist, durch exotherme Reaktionen stärker erwärmt als der andere Teilfühler, der keine katalytisch aktive Beschichtung aufweist. Aus der Temperaturdifferenz zwischen dem ersten und dem zweiten Teilfühler wird ein Maß für die im Abgas befindlichen Schadstoffe ermittelt.

Aus der EP 0743431 A2 ist ein Verfahren und ein System zum bestimmen der Abgasqualität, insbesondere die HC-Konzentration der Brennkraftmaschine bekannt, bei dem ein Sensorraum vorgesehen ist, der mit dem Abgas in Verbindung steht. Außerdem sind Pumpelemente vorgesehen, die Sauerstoff aus dem Sensorraum pumpen und eine vorgegebene Sauerstoffkonzentration einstellen. Zur Bewertung der Konvertierungsfähigkeit des Katalysators wird der Pumpstrom der Pumpelemente gemessen.

In der DE 4019572 A1 ist ein Verfahren zur Erkennung der Gefährdung oder Schädigung von Katalysatoren oder katalytischen Beschichtungen und zur Erkennung von Verbrennungsaussetzern, insbesondere zur Erkennung von sauerstoffhaltigen oxidationsfähigen Gemischen und/oder zur Erkennung von Alterung und/oder Vergiftungserscheinungen von Katalysatoren oder katalytischen Beschichtungen bei Brennkraftmaschinen mit innerer Verbrennung bekannt. Dabei werden mindestens zwei Meßgrößen ausgewertet, die von jeweils unterschiedlichen katalytischen Effekten beeinflußt sind.

Die Aufgabe der Erfindung beruht darin, ein einfaches Verfahren zur Überprüfung der Funktionsfähigkeit des Katalysators bereitzustellen.

Die Aufgabe der Erfindung wird durch die Merkmale des Anspruchs 1 gelöst. Eine besonders einfache Ermittlung der Funktionsfähigkeit des Katalysators beruht darin, einen Sauerstoffsensor mit einer möglichst geringen katalytischen Wirkung auf das Abgas zu verwenden, dessen Widerstand von dem Sauerstoff-Partialdruck im Abgas abhängt. Der Sauerstoff) Partialdruck im Abgas ist wiederum ein Maß für die Konvertierungsfähigkeit des Katalysators.

Vorteilhafte Ausbildungen der Erfindung sind in den Unteransprüchen angegeben.

Im folgenden wird anhand der Figuren die Erfindung näher erläutert. Es zeigt

Figur 1 eine Abgassonde,
Figur 2 eine Anordnung
Figur 3 ein Diagramm, und
Figur 4 Widerstandskennlinien.

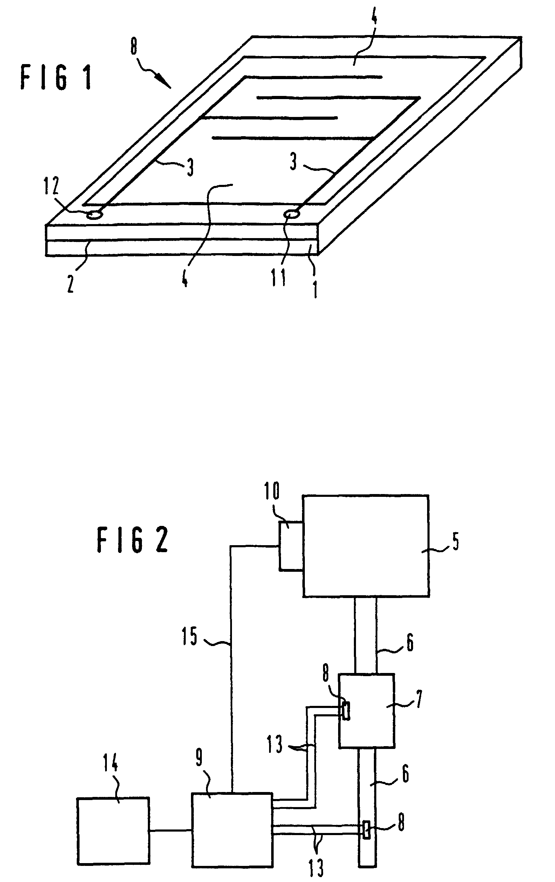

Figur 1 zeigt einen schematischen Aufbau einer Abgassonde 8, die ein Substrat 1 aufweist, das aus Aluminiumoxid gefertigt ist. Im Substrat 1 ist ein Heizelement 2 angeordnet, das die Abgassonde 8 auf eine vorgegebene Betriebstemperatur aufheizt, die zwischen 800°C und 900°C liegt. Auf der Oberseite des Substrates 1 ist eine Meßelektrode 3 aufgebaut, die aus Platin besteht. Über der Meßelektrode 3 ist eine Metalloxidschicht 4 aufgebracht, die aus Strontiumtitanat ($SrTiO_3$) gebildet ist. Die Abgassonde 8 stellt einen Sauerstoffsensor dar. Zur Messung des Widerstandes der Metalloxidschicht 4 wird an die Anschlußpunkte 11, 12 der Meßelektrode 3 eine Spannung angelegt und aus dem Strom der Widerstand berechnet.

Figur 2 zeigt eine Anordnung zum Nachweis der Funktionsfähigkeit des Katalysators 7. Eine Brennkraftmaschine 5 ist mit einer Abgasleitung 6 verbunden, die an den Katalysator 7 angeschlossen ist, an dessen Ausgang die Abgasleitung 6 weitergeführt ist. Die Abgassonde 8 ist entweder im Katalysator 7 oder nach dem Katalysator 7 in die Abgasleitung 6 eingebracht und über Meßleitungen 13 mit einer Recheneinheit 9 verbunden. Die Recheneinheit 9 hat über eine Datenleitung auf einen Speicher 14 Zugriff, in dem Kennlinien für den Widerstand der Abgassonde 8 in Abhängigkeit von der Luftzahl $\lambda$ bei der Einspritzung und der Konvertierungsfähigkeit $\eta$ des Katalysators 7 abgelegt sind. Zudem ist an die Recheneinheit 9 eine Steuerleitung 15 angeschlossen, die an die Einspritzanlage 10 der Brennkraftmaschine 5 geführt ist.

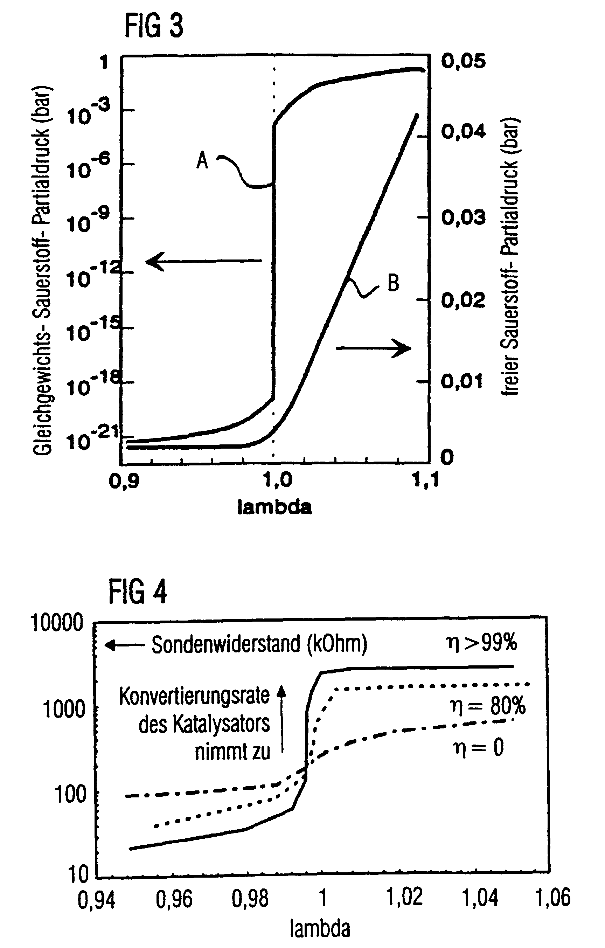

Figur 3 zeigt ein Diagramm, das eine erste Kennlinie A darstellt, die den Gleichgewichts-Sauerstoff-Partialdruck des Abgases in Abhängigkeit von der Luftzahl $\lambda$ zeigt. Für die erste Kennlinie A ist der Druck in bar angegeben. Weiterhin ist in dem Diagramm eine zweite Kennlinie B angegeben, die den freien Sauerstoff-Partialdruck des Abgases in Abhängigkeit von der Luftzahl $\lambda$ beschreibt. Der Druck für die zweite Kennlinie B ist ebenfalls in bar angegeben.

Ein   Gleichgewichts-Sauerstoff-Partialdruck stellt sich im Abgas nach dem Katalysator 7 ein, wenn die Konvertierungsfähigkeit des Katalysators 7 groß ist und damit die Funktionsfähigkeit des Katalysators 7 in Ordnung ist. Durch die katalytische Wirkung des Katalysators 7 wird ein freier Sauerstoff-Patialdruck im Abgas in einen Gleichgewichts-Sauerstoff-Partialdruck überführt, so daß bei einem funktionsfähigen Katalysator 7 im oder nach dem Katalysator 7 eine Kennlinie entsprechend der ersten Kennlinie A in Abhängigkeit von der Luftzahl $\lambda$ gemessen wird.

Besitzt der Katalysator 7 keine Konvertierungfähigkeit, so ergibt sich im Abgas im oder nach dem Katalysator 7 ein freier Sauerstoff-Partialdruck, so daß in Abhängigkeit von der Luftzahl $\lambda$ die zweite Kennlinie B im oder nach dem Katalysator 7 gemessen wird. Bei einem teilweise funktionierenden Katalysator 7 stellt sich eine Kennlinie ein, die zwischen der ersten Kennlinie A und der zweiten Kennlinie B liegt.

Figur 4 zeigt ein Diagramm, in das Kennlinien für den Widerstand der Abgassonde 8 in Abhängigkeit von der Luftzahl $\lambda$ und der Konvertierungsfähigkeit $\eta$ des Katalysators 7 eingezeichnet sind. Die Konvertierungsfähigkeit $\eta$ ist ein Maß für die katalytische Aktivität und beispielsweise folgendermaßen definiert:

$$\eta = (HC_{vor} - HC_{nach}) / HC_{vor},$$

wobei $HC_{vor}$ die Konzentration der Kohlenwasserstoffverbindungen vor dem Katalysator 7 und $HC_{nach}$ die Konzentration der Kohlenwasserstoffverbindungen nach dem Katalysator 7 bezeichnet.

Die Konvertierungsfähigkeit des Katalysators 7 ist in diesem Beispiel explizit für die Kohlenwasserstoffverbindungen angegeben, wobei auch die Konvertierungsfähigkeit für andere Verbindungen wie z.B. Kohlenmonoxid (CO) oder Stickoxide (NOx) betrachtet werden können. Die Formel für die Konvertierungsfähigkeit des Katalysators 7 ist in bezug auf Kohlenmonoxid und Stickoxid analog zu der Formel für die Konvertierungsfähigkeit der Kohlenwasserstoffverbindungen aufgebaut.

Der Widerstand der Abgassonde 8 ist nach oben im logorithmischen Maßstab und die Luftzahl $\lambda$ nach rechts aufgetragen. Ist die Konvertierungsfähigkeit des Katalysators gleich 0, so steigt der Widerstand der Abgassonde 8 von einem Wert von ungefähr 100 kOhm für eine Luftzahl kleiner 1 auf ungefähr 300 kOhm für eine Luftzahl $\lambda$ größer 1. Ist die Konvertierungsfähigkeit $\eta$ des Katalysators 7 größer als 99%, so zeigt der Widerstand der Abgassonde 8 für eine Luftzahl $\lambda < 1$ einen Wert von ungefähr 25 kOhm und steigt für eine Luftzahl $\lambda > 1$ auf einen Wert von 3000 kOhm.

Liegt die Konvertierungsfähigkeit zwischen den Werten 0 und 99%, so ergeben sich Kennlinien, die zwischen den zwei angegebenen Kennlinien liegen. Figur 4 zeigt deutlich, daß die Konvertierungsfähigkeit des Katalysators 7 einen großen Einfluß auf den Widerstand der Metalloxidschicht 4 der Abgassonde 8 hat, die eine möglichst geringe katalytische Aktivität aufweist. Die katalytische Wirkung der Metalloxidschicht 4 auf das Abgas ist durch die Konvertierungsfähigkeit $\eta m$ bestimmt, wobei die Konvertierungsfähigkeit $\eta m$ folgendermaßen definiert ist: $\eta m = (HC_{ohne} - HC_{mit}) / HC_{ohne}$, wobei mit $HC_{ohne}$ die Konzentration der Kohlenwasserstoffverbindungen ohne Einwirkung der katalitischen Metalloxidschicht 4 und mit $HC_{mit}$ die Konzentration der Kohlenwasserstoffverbindungen unter Einwirkung der katalytischen Metalloxidschicht 4 bezeichnet sind. Weitere Metalloxidschichten mit geringer katalytischer Aktivität sind beispielsweise: Ceroxid ($CeO_2$), Galliumoxid ($Ga_2O_3$) und Titanoxid ($TiO_2$).

Die Konvertierungsfähigkeit der aktiven Metalloxidschicht 4 ist in diesem Beispiel explizit für die Kohlenwasserstoffverbindungen angegeben, wobei auch die Konvertierungsfähigkeit für andere Verbindungen wie z.B. Kohlenmonoxid (CO) oder Stickoxide (NOx) betrachtet werden können. Die Formel für die Konvertierungsfähigkeit der aktiven Metalloxidschicht 4 ist in bezug auf Kohlenmonoxid und Stickoxid analog zu der Formel für die Konvertierungsfähigkeit der Kohlenwasserstoffverbindungen aufgebaut.

Der Widerstand R der Metalloxidschicht 4 ist invers proportional zur Leitfähigkeit $\sigma$. Die Leitfähigkeit $\sigma$ zeigt folgende Abhängigkeit:

$$\sigma(T) = \sigma o \bullet Exp \, (-E/kT) \bullet f(po),$$

wobei

$\sigma o$ eine Leitfähigkeitskonstante,
E eine Aktivierungsenergie,
k die Boltzmannkonstante,
T die absolute Temperatur und
$f(po)$ eine Funktion des Sauerstoff-Partialdrucks in der Umgebung der Metalloxidschicht 4 bezeichnet.

Bei einem n-leitenden Metalloxid beispielsweise nimmt der elektrische Widerstand mit steigendem Sauerstoffpartialdruck zu. In fetten Abgasgemischen ($\lambda < 1$) nimmt der Widerstand mit steigender Konvertierungsfähigkeit des Katalysators ab, weil der Sauerstoffpartialdruck im Abgas um Größenordnungen abnimmt. In mageren Abgasgemischen ($\lambda > 1$) kommt es aufgrund von Querempfindlichkeiten zu einer Widerstands zunahme mit steigender Konvertierungsfähigkeit des Katalysators.

Die Funktion der erfindungsgemäßen Anordnung wird anhand der Figur 2 und der Figur 4 näher erläutert. Die Recheneinheit 9 mißt den Widerstand der n-leitenden Metalloxidschicht 4 der Abgassonde 8, die nach dem Katalysator 7 in der Abgasleitung 6 angeordnet ist. Dabei kann die Auswertung der Widerstandswerte der Abgas sonde 8 auf verschiedene Weise erfolgen.

Eine Auswertung des Widerstandes der Abgas sonde 8 besteht darin, den von der Recheneinheit 9 gemessenen Widerstand mit Kennlinien zu vergleichen, die im Speicher 14 abgelegt sind und den Widerstand der Abgassonde 8 in Abhängigkeit von der Luftzahl λ und in Abhängigkeit von der Konvertierungsfähigkeit des Katalysators 7 entsprechend der Figur 4 angeben. Einen gemessenen Widerstand ordnet die Recheneinheit 9 einer abgelegten Kennlinie zu und ermittelt somit die Konvertierungsfähigkeit des Katalysators 7.

Entsprechend Figur 4 ist für einen λ-Wert größer 1 ein Widerstand von 3000 kOhm ein Zeichen dafür, daß die Konvertierungsfähigkeit η größer als 99% ist. Zeigt jedoch der Widerstand für einen Wert λ größer 1 einen Wert von 200 kOhm, so entspricht dieser Wert der Widerstandskennlinie für die Konvertierungsfähigkeit η = 0, d.h. der Katalysator 7 weist keine Konvertierungsfähigkeit auf.

Bei einer vorgegebenen λ-Regelung, mit der vor der Brennkraftmaschine 5 alternierend ein Verhältnis von Kraftstoff zu Luft mit einem Wert λ<1 und einem Wert λ>1 eingestellt wird, zeigt die Abgassonde 8 Widerstandssprünge, wie aus dem Vergleich mit Figur 4 erkennbar ist. Die Widerstandssprünge sind umso größer, je besser die Konvertierungsfähigkeit des Katalysators 7 ist. Die Amplitude der Schwingung des Widerstandes der Abgassonde 8 steht im direkten Zusammenhang zu der Konvertierungsfähigkeit des Katalysators.

Ein weiterer Nachweis der Konvertierungsfähigkeit beruht darin, die Widerstandssprünge für den Ubergang von λ<1 auf λ>1 mit einer vorgegebenen Widerstandsschwelle von z.B. 600 kOhm zu vergleichen, und einen Katalysator 7 als funktionsfähig zu detektieren, wenn die Widerstandssprünge größer als die vorgegebene Widerstandsschwelle sind.

**Patentansprüche**

1. Verfahren zur Überprüfung der Funktionsfähigkeit eines Katalysators einer Brennkraftmaschine mit einem Sauerstoffsensor, der in einem Katalysator oder in einer Abgasleitung nach dem Katalysator angeordnet ist, wobei der Sauerstoffsensor eine Schicht aufweist, die nicht oder nur in geringem Maße katalytisch auf das Abgas einwirkt, **dadurch gekennzeichnet,**

   daß der Widerstand der Schicht (4) gemessen wird und mit einem Referenzwert verglichen wird, wobei als Referenzwert Werte oder Kennlinien für den Widerstand der Schicht (4) in Abhängigkeit von der Luftzahl und der Konvertierungsrate des Katalysators (7) verwendet werden, und
   daß das Ergebnis des Vergleichs als Maß für die Konvertierungsfähigkeit des Katalysators (7) ausgewertet wird.

2. Verfahren nach Anspruch 1, dadurch gekennzeichnet, daß der Widerstand der Schicht (4) für eine Luftzahl kleiner eins und für eine Luftzahl größer eins gemessen wird, und daß die Differenz der gemessenen Widerstände ein Maß für die Konvertierungsfähigkeit des Katalysators (7) ist.

3. Verfahren nach Anspruch 2, dadurch gekennzeichnet, daß der Katalysator (7) als defekt erkannt wird, wenn die Differenz der Widerstandswerte größer als ein Grenzwert ist.

4. Verfahren nach Anspruch 1, dadurch gekennzeichnet, daß die Schicht (4) als Metalloxidschicht ausgebildet ist.

**Claims**

1. A method for checking the functional performance of a catalytic converter for internal combustion engines, using an oxygen sensor located in the catalytic converter or in an exhaust gas line following the catalytic converter, the oxygen sensor having a coating which has no or only a small catalytic effect on the exhaust gas, **characterised in that**

   the resistance of the coating (4) is measured and is compared to a reference value, the reference value being provided by data or characteristic curves representing the resistance of coating (4) as a function of both the air ratio and of the conversion rate ofthe catalytic converter (7), and that

   the result of the comparison is used as a measure for the conversion capability ofthe catalytic converter (7).

2. A method according to Claim 1, characterised in that the resistance of coating (4) is measured for an air ratio smaller than one and for an air ratio greater than one, and that the difference between the measured resistance values is a measure for the conversion capability of the catalytic converter (7).

3. A method according to Claim 2, characterised in that the catalytic converter (7) is deemed to be defective if the difference between the resistance values is greater than a threshold value.

4. A method according to Claim 1,

characterised in that
the coating (4) is a layer of metal oxide.

## Revendications

1. Procédé de contrôle de la capacité fonctionnelle d'un catalyseur d'un moteur à combustion interne avec un détecteur d'oxygène, qui est placé dans un catalyseur ou dans une canalisation de gaz d'échappement après le catalyseur, le détecteur d'oxygène comportant une couche qui n'exerce sur le gaz d'échappement aucune action catalytique ou seulement une action faiblement catalytique,
caractérisé en ce que la résistance de la couche (4) est mesurée et comparée à une valeur de référence, des valeurs ou des courbes caractéristiques étant utilisées comme valeur de référence pour la résistance de la couche (4) en fonction du rapport air/carburant et du taux de conversion du catalyseur (7), et
en ce que le résultat de la comparaison est exploité comme mesure pour la capacité de conversion du catalyseur (7).

2. Procédé selon la revendication 1, caractérisé en ce que la résistance de la couche (4) pour un rapport air/carburant inférieur à 1 et pour un rapport air/carburant supérieur à 1 est mesurée et en ce que la différence des résistances mesurées est une mesure de la capacité de conversion du catalyseur (7).

3. Procédé selon la revendication 2, caractérisé en ce que le catalyseur (7) est reconnu comme défectueux, lorsque la différence des valeurs de résistance est supérieure à une valeur limite.

4. Procédé selon la revendication 1, caractérisé en ce que la couche (4) a la forme d'une couche d'oxyde métallique.

FIG 1

FIG 2

## FIG 3

Gleichgewichts- Sauerstoff- Partialdruck (bar)

freier Sauerstoff- Partialdruck (bar)

A

B

lambda

## FIG 4

10000

Sondenwiderstand (kOhm)

$\eta > 99\%$

Konvertierungsrate
des Katalysators
nimmt zu

$\eta = 80\%$

$\eta = 0$

1000

100

10

0,94   0,96   0,98   1   1,02   1,04   1,06

lambda